# EUROPEAN PATENT APPLICATION

(11) **EP 4 660 001 A1**
(43) Date of publication of application: **10.12.2025**
(21) Application number: 24461580.3
(22) Date of filing: 04.06.2024
(51) Int. Cl.: B60N 2/02, B60N 2/879, B60R 11/02, B64D 11/06, H02J 50/00, H04R 1/10, B60N 2/90, B60R 11/00

(54) **HEADSET STORING AND CHARGING ASSEMBLY**

(71) Applicant: B/E Aerospace Fischer GmbH, 84034 Landshut (DE)
(72) Inventor: CHODYNIECKI, Marcin Adam, 51-317 Wroclaw (PL); KALISZCZYK, Piotr Krzysztof, 51-317 Wroclaw (PL); KO ODZIEJCZAK, Marcin Szymon, 51-317 Wroclaw (PL)
(74) Representative: Dehns

(57) **Abstract**

A headrest assembly comprising a seat headrest (1), a charging device (10) for charging a headset, mounted to or in the headrest, and activation means (101) for activating the charging device in response to location of a headset, in use, on the headrest, to charge the headset.

## Description

### TECHNICAL FIELD

The present disclosure relates to an assembly for storing and charging a headset used for communication between people in e.g. vehicles and aircraft, but also in other seating settings.

### BACKGROUND

In various environments where there is a need for two or more people to communicate, they may be provided with headsets having speaker parts arranged to be located in, over or adjacent the ears of the wearer and, in some cases, a microphone that is positioned close to the wearer's mouth. The use of headsets (also known as headphones) enables improved communication between multiple people especially when they are located in a high noise and/or high vibrational environment such as in a vehicle or aircraft or even in other noisy setting e.g. factories, crowded rooms, or where the distance between or relative spatial locations of the people mean that communication might be compromised if by means of simple voice communication.

An example of where headsets are useful for communication between people is in an aircraft where crew and/or passengers can communicate with each other via Headsets e.g. during take-off, flight and landing, where it might otherwise be difficult for them to hear each other.

Whilst the use of headsets in such environments greatly improves communication, the headsets themselves can create problems. Typically, headsets used in these environments are equipped with a cable via which they are plugged into a power source and via which audio signals are transmitted. In aircraft, for example, the headset may be plugged into a socket in the, or an adjacent, seat or seat arm. Such cables can add to the overall weight of the headset and can also present obstructions and inconvenience the user and others. When wearing the headset which is plugged in, the range of movement of the wearer is restricted by the cable and the cables can also get in the way of other passengers needing to move around. This can also present a safety issue if people trip over the cables or are, for example, prevented from quickly moving about the aircraft (or other space) in an emergency.

Another problem that has been identified as that, when the headsets are not in use, people do not often know where to put the headset, and often leave it on a seat, or on the floor, where it can be damaged. Furthermore, in cases where not all headsets are in use, they will be unsecured and may be damaged or cause damage or injury if they move around in e.g. turbulent conditions.

The inventors have identified a need for an improved way of storing and charging headsets.

### SUMMARY

Accordingly, there is provided, a headrest assembly comprising a seat headrest, a charging device for charging a headset, mounted to or in the headrest, activation means for activating the charging device in response to location of a headset, in use, on the headrest, to charge the headset.

### BRIEF DESCRIPTION

Examples of the assembly according to the disclosure will be described with reference to the drawings. It should be noted that these are examples only and that variations are possible within the scope of the claims.

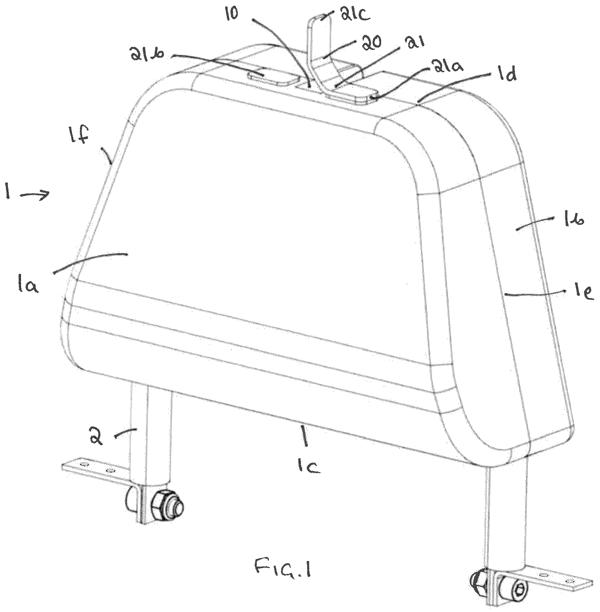

Figure 1 is a front view of an example of a headrest assembly according to the disclosure.

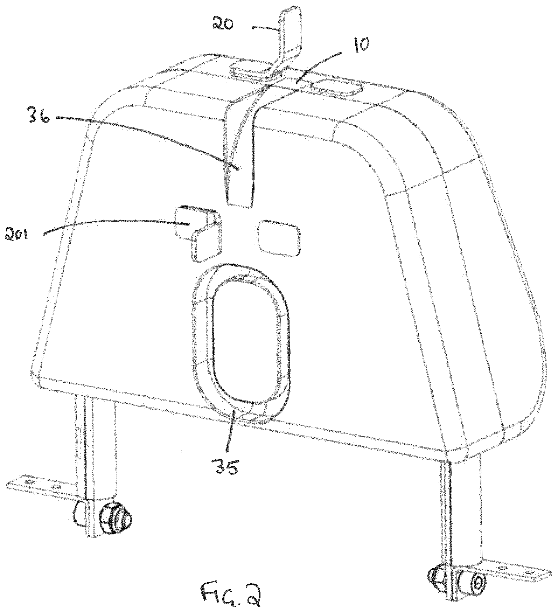

Figure 2 is a rear view of a headrest assembly as shown in Fig. 1.

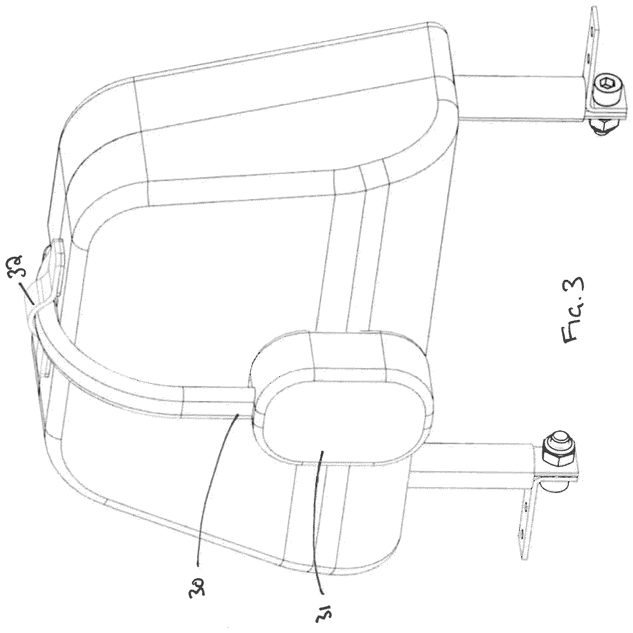

Figure 3 shows a headrest assembly as shown in Figs. 1 and 2, with a headset located thereon.

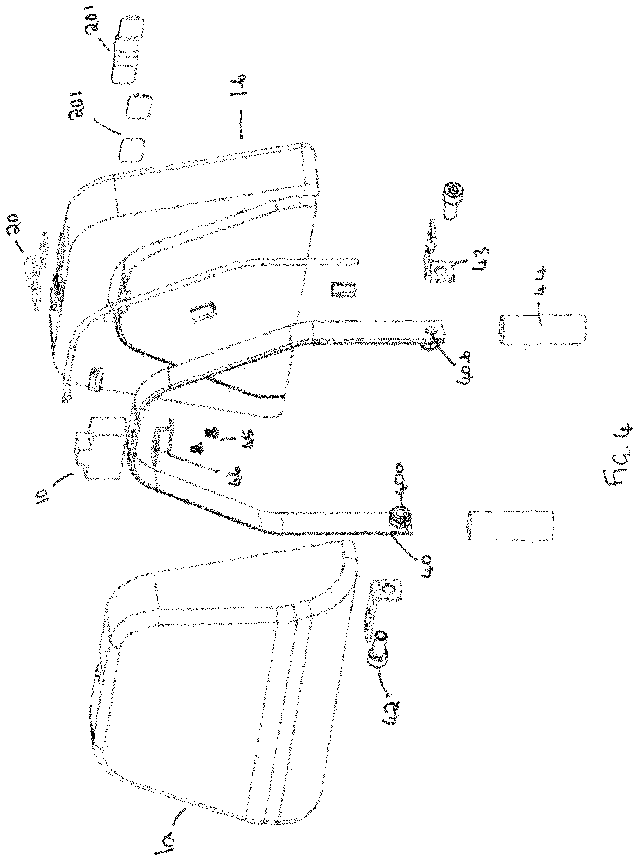

Figure 4 is an exploded view of a headrest assembly according to the disclosure.

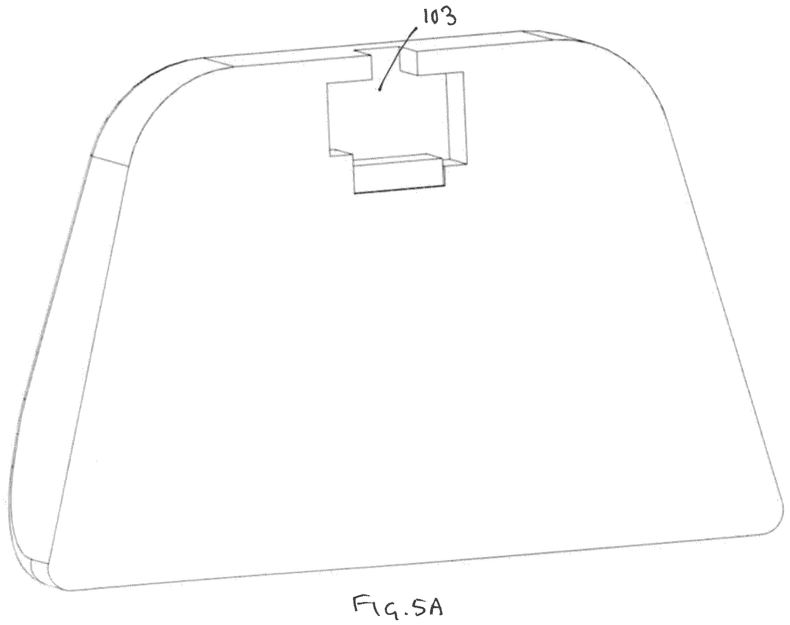

Figure 5A shows a view of the interior of one side of a headrest assembly according to the disclosure.

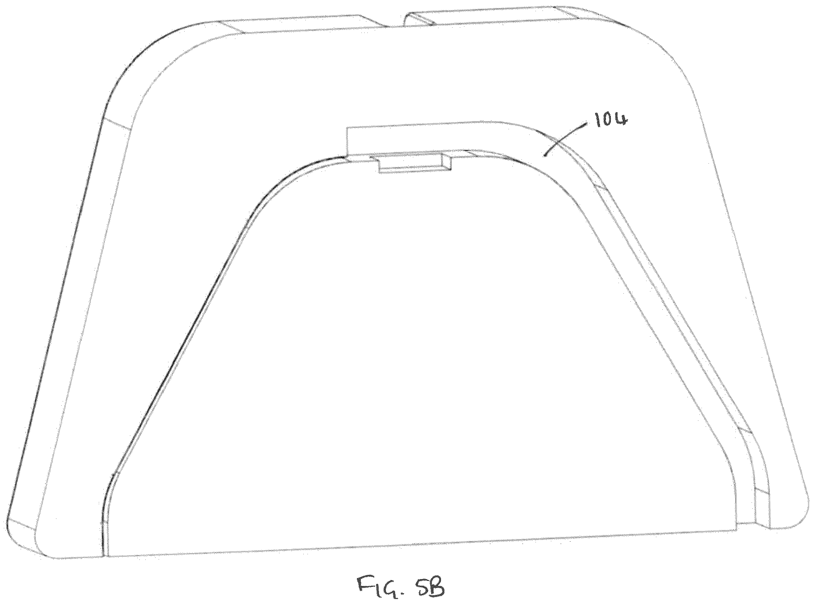

Figure 5B shows a view of the interior of another side of a headrest assembly according to the disclosure.
Figure 6A shows, from a first perspective, details of a charging device in a headrest assembly according to the disclosure.
Figure 6B shows the arrangement of Fig. 6A from an alternative perspective.
Figure 7 shows an opened-out view of a headrest assembly according to the disclosure.
Figure 8 illustrates further details of a headrest assembly according to the disclosure.

### DETAILED DESCRIPTION

The headrest assembly of this disclosure has a headset charging device 10 incorporated into the headrest 1 of a seat such that when a headset 30 is located onto the headrest, the charging device is activated to charge the headrest. The assembly further, in embodiments, has a holder 20 for securing the headset to the headrest in the charging location.

Seats in vehicles and aircraft are typically provided with a headrest for the safety and/or comfort of people using the seats. The headrest 1 of this assembly may be of any shape, size and configuration and made of any material suitable for use as a headrest of a seat. The headrest may be formed as an integral part of, or may be attached or mounted to a seat. The seat may be e.g. a passenger seat in an aircraft or vehicle or a seat for any other setting e.g. a conference or meeting room, a factory, control center, classroom, or anywhere where headsets are used in a seated setting.

The examples shown here are headrests of the type attached e.g. by legs 2 or other attachments, to an aircraft or vehicle seat, and comprise a front cushion part 1a against which the user's head will rest, in use, and a rear headrest part 1b attached to the back of the front cushion part 1a, the front and rear parts 1a, 1b combining to form the headrest defined by a lower edge 1c, an upper edge 1d and side edges 1e, 1f.

The charging device 10 may also be of any known type of wireless charger suitable for charging headsets. It may be a universal charger or a charger specific to the type of headsets selected for use in the specific environment or application where the assembly of this disclosure is to be used. In examples, the charging device provides inductive charging via charge coils in the charging device and the headset. Some possible examples will be described below.

The charging device 10 in the examples is incorporated into the headset close to or at the upper edge 1d such that it is in proximity to the headset when the headset is located on the top of the headset. Other locations in or on the headset are also possible provided the charging signals reach the headset when it is located on the headrest.

The assembly may also be provided with a holder 20 to secure the headset to the headrest during charging/storage of the headset. In the example shown, the holder 20 comprises a strap 21 e.g. a Velrco^{®} strap secured, at one end 21a to the headrest 10 and a patch 21b attached to the headrest at a location spaced from the first end, such that the second end 21c of the strap 21 can be fixed to the patch 21b. The location of the strap is such that when the headset is located on the headrest in its charging location, the strap secures over a part (e.g. the headband part between the ear-pieces) of the headset to secure it to the headset. Other holders are also envisaged such as straps secured by pins or rivets or other fixation means or various types of bracket or the like.

Regardless of the type of charger, in embodiments, the charging device 10 should only be activated when the headset 30 is located in the charging position on the headrest. This avoids, for example, charging radiation being emitted when a person is sitting in the seat. The assembly, therefore, includes activation means to activate the charging device in response to location of the headset 30 on the headrest in the charging position. The activation means may be, for example, a touch sensor 101 formed on or integrated with the charging device 10 and arranged to come into physical contact with the headset 30 and to activate the charging device in response to such contact. It is envisaged that other activating means such as optical sensors, proximity sensors or various mechanical or electrical sensors could also be used as is known in the art. In the example shown, the charging device 10 is integrated in the headrest such that the touch sensor 101 is exposed and/or protrudes from the headrest (here the top edge, but could be other locations) to be contacted by the headset 30.

The assembly is configured to receive a headset on the headrest so that the headrest is in suitable contact with the charging device to charge the headset. In the example shown, the headset 30 is of the type having two ear-pieces 31 connected by a headstrap or headband 32 and the assembly is such that in the charging and storage position, the headset is located with the headband across the tope edge of the headrest and one ear-piece 31 adjacent each of the front part 1a and the rear part 1b of the headrest. It is also envisaged that other location orientations may be selected.

To facilitate, and make more visually clear and intuitive, the correct location of the headset 30 on the headrest 1, the headrest may be provided with markings or with recesses 35,36 in the headrest for one or more of the ear-pieces and the headband of the headset. The recesses are shaped to match the relevant part of the headset for location thereof in the respective recess. In the example shown, there may be a recess shaped to receive one ear-piece on the front part of the headset, a recess 35 shaped to receive the other ear-piece on the rear part of the headrest and a recess 36 shaped to receive the headband across the top of the headrest from the front part to the rear part.

A holder 20 as discussed above may be provided to secure over the headband at the top of the headrest. A further holder 201 may be provided to fasten the headset to the front and/or rear parts of the headrest. The holders 20, 201 help prevent undesired movement of the headset, and need to be opened by the user to remove the headset from the charger to place the headset on the user's head.

As mentioned above, the charging device may be attached to or integrated in the headrest, and various types of charger and headrest are envisaged. In this example, the charging device 10 is located between the front part 1a and the rear part 1b of the headrest 1 and is positioned such that the touch sensor 101 is exposed and/or protrudes from the top edge of the headrest. To support the charging device 10 in the correct position relative to the headrest, it may be mounted to a frame 40 within the headrest. The frame 40 may be made, for example, of sheet metal or flat metal bars bent of formed into shape to fit within the headrest. In the example shown, the charging device 10 is supported on a frame 40 that forms part of an existing headrest structure, and which has opposing ends 40a, 40b which form or are attached to, e.g. using screws and/or brackets 42,43 the legs of the headrest for attachment to the seat. Covers 44 may be provided over the exposed parts of the frame for comfort/aesthetic reasons. The charging device 10 may be attached to the frame 40 by e.g. screws 45 and/or brackets 46. It should be clear that this is only one example of how a charging device may be mounted within a headrest.

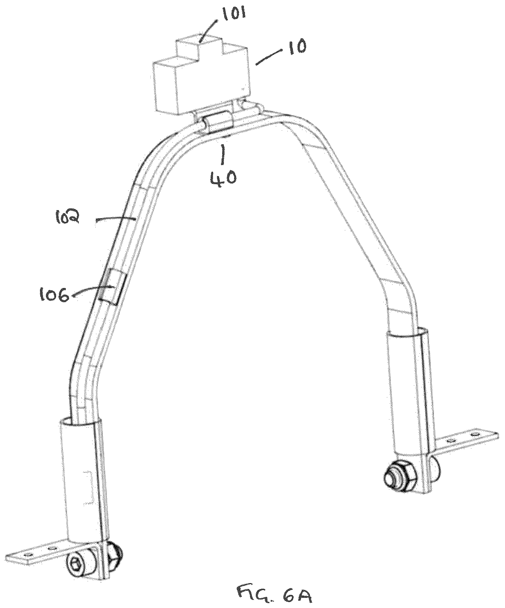

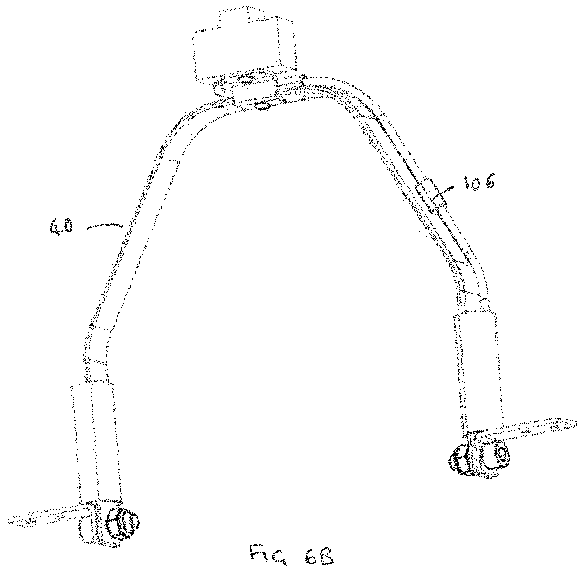

The charging device 10 may be powered by any known power source. In one example, as shown, the charging device 10 is connected to a power source via a cable 102. This cable may run from the charging device within the headrest and exit the headrest at a bottom edge to attach to a power source. As best seen in Figs. 6A and 6B, the cable 102 can run along and be secured to the headrest frame 40 by e.g. cable holders 106. Alternatively, the power source may be e.g. a battery (which may be rechargeable) within the charging device or the headrest.

In an embodiment, the location of the charging device 10 within the headrest 1 may be improved, and the charging device may be held more securely in position, by providing a recess 103 in one or both of the front or rear part of the headrest on the inner sides (being the sides of the front and rear parts that come together to form the headrest). The recess 103 may be shaped to match the shape of the charging device. A recess 104 may also be provided in one or both of the headrest front and rear parts to accommodate the charging cable 102 if present.

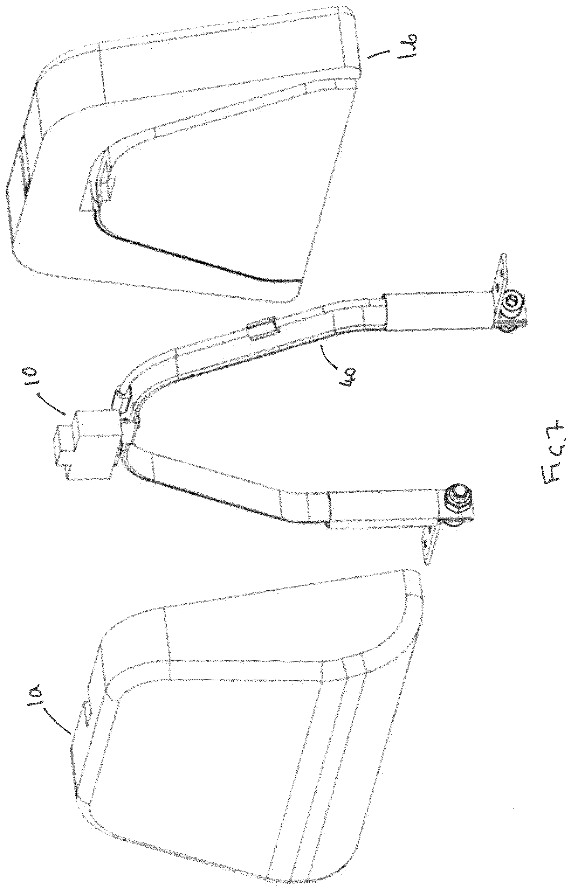

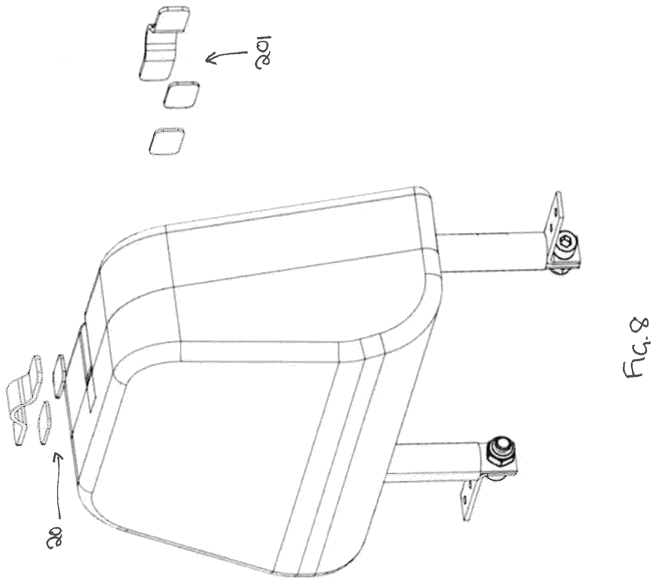

One way of assembling a headrest assembly according to the disclosure can be seen in Figs. 7 and 8 in which the charging device 10 and cable are assembled to the headrest frame 40 which is located between the front and rear parts 1a, 1b of the headrest. These parts are then brought together, enclosing the frame and charging device therebetween and are secured together e.g. by adhesion or by fasteners, to form the headrest assembly in a single headrest unit. The holders 20, 201, where present, are then applied to the exterior of the assembled headrest 1.

The headrest assembly can be easily designed and incorporated into the design of existing seats and provides a convenient and intuitive location for storage and charging of a headset when not in use, thus addressing the problems identified above with existing headset use. By allowing use of wireless headsets, the problems associated with cables, mentioned above, can be avoided. The assembly is simple, light and easy to use. No special tools are required to install the assembly and no additional clearance is required around the seat/headrest to accommodate the assembly.

## Claims

1. A headrest assembly comprising a seat headrest (1), a charging device (10) for charging a headset, mounted to or in the headrest, and activation means (101) for activating the charging device in response to location of a headset, in use, on the headrest, to charge the headset.

2. The assembly of claim 1, further comprising a holder (20) configured to secure a headset, in use, to the headrest (1) for charging.

3. The assembly of claim 2, wherein the holder (20) comprises a strap (21) arranged to be secured across the headset to the headrest.

4. The assembly of claim 3, wherein the strap (21) is a Velcro^{®} strap.

5. The assembly of any preceding claim, wherein the headrest comprising a front part (1a) and a rear part (1b) which together form the headrest (1) and wherein the charging device (10) is located in the headrest between the front part and the rear part.

6. The assembly of claim 5, wherein the charging device (10) is located adjacent a top edge of the headrest.

7. The assembly of any preceding claim, wherein the activation means comprises a touch sensor (101) arranged to be contacted by the headset, in use, when the headset is located on the headrest.

8. The assembly of any preceding claim, wherein the charging device (10) is mounted on a frame (40) within the headrest.

9. The assembly of any preceding claim, further comprising a cable (102) connecting the charging device (10) to a source of power.

10. The assembly of any preceding claim, further comprising one or more recesses (35, 36) formed in an exterior surface of the headrest shaped to receive one or more parts of the headset, in use.

11. The assembly of any preceding claim, further comprising one or more recesses (103, 104) formed in the interior of the headrest shaped to receive the charging device (10).

12. The assembly of any preceding claim, further comprising the headset (30).

13. The assembly of claim 12, wherein the headset (30) comprises two ear-pieces (31) joined by a headband (32).

14. The assembly of any preceding claim, being an assembly for mounting to a seat of an aircraft.
